# EUROPÄISCHE PATENTSCHRIFT

(11) **EP 2 655 880 B1**
(45) Veröffentlichungstag und Bekanntmachung des Hinweises auf die Patenterteilung: **23.04.2014**
(21) Anmeldenummer: 11819066.9
(22) Anmeldetag: 22.12.2011
(51) Int. Cl.: F03D 11/02, F03D 7/02, F16D 7/02, F03D 11/00

(54) **Windenergieanlage mit Getriebe/Generator Kupplung**
Wind turbine with Gearbox/Generator coupling
Eolienne avec accouplement boîte de vitesse/générateur

(30) Priorität: 24.12.2010 DE 102010055876
(43) Veröffentlichungstag der Anmeldung: 30.10.2013
(73) Patentinhaber: aerodyn Engineering GmbH, 24768 Rendsburg (DE)
(72) Erfinder: SIEGFRIEDSEN , Sönke, 24768 Rendsburg (DE)
(74) Vertreter: Lobemeier, Martin Landolf
(86) Internationale Anmeldenummer: PCT/DE2011/002166
(87) Internationale Veröffentlichungsnummer: WO 2012/083931

(56) Entgegenhaltungen:
- EP-A1- 0 811 764
- EP-A2- 2 216 547
- WO-A2-2008/113318
- DE-U1-202010 012 659

## Beschreibung

Die Erfindung betrifft eine zur Verwendung bei Windenergieanlagen geeignete Kupplung zum Verbinden des Abtriebs eines Getriebes mit dem Antrieb eines Generators.

Eine derartige Kupplung ist beispielsweise von der Firma KTR Kupplungstechnik GmbH bekannt, die unter dem Zeichen RADEX^{®}-N gehandelt wird und die die Getriebewelle mit der Generatorwelle mittels eines aus glasfaserverstärktem Kunststoff hergestellten Zwischenstücks miteinander verbindet. Diese Kupplung weist zusätzlich eine Sensorscheibe zur Drehzahlüberwachung, eine als Rutschnabe ausgebildete Drehmomentbegrenzung zum Schutz des Getriebes vor generatorseitigen Lastspitzen und eine getriebeseitige Bremsscheibe auf.

Diese Art Kupplung hat jedoch aufgrund der Anordnung des Zwischenstücks zwischen Getriebewelle und Generatorwelle einen relativ hohen Platzbedarf, der einer zunehmend gewünschten kompakten Bauweise einer Windenergieanlage entgegensteht.

Darüber hinaus ist die Installation der Kupplung, insbesondere die Ausrichtung von Getriebe und Generator bzw. Getriebewelle und Generatorwelle zueinander sehr arbeitsaufwändig und fehlerträchtig, wobei eine Fehlausrichtung von Getriebewelle zu Generatorwelle zu einer erhöhten Lagerbelastung im Getriebe und Generator führen kann. Zwar werden die Getriebewelle und die Generatorwelle sehr einfach mittels Spannsätzen mit der Kupplung verbunden, dennoch muss der Abstand von Getriebe und Generator bzw. Getriebewelle und Generatorwelle, vor allem die Fluchtung der Achsen im Stillstand und unter Last, jeweils so justiert werden, dass eine optimale Verbindung der Kupplung mit Getriebewelle und Generatorwelle erreicht werden kann.

EP 0 811 764 A1 offenbart eine Windenergieanlage mit einer Kupplung zwischen Getrieb und Generator aus dem Stand der Technik.

Aufgabe der vorliegenden Erfindung ist es daher, eine Windenergieanlage mit einer Kupplung zum Verbinden des Abtriebs eines Getriebes mit dem Antrieb eines Generators, also zum Verbinden von Getriebewelle mit Generatorwelle bereitzustellen, die weniger arbeitsaufwändig eingerichtet werden kann und eine gegenüber dem Stand der Technik kompaktere Bauweise aufweist.

Die Aufgabe wird durch die Anordnung mit den Merkmalen von Anspruch 1 gelöst. Die Unteransprüche geben vorteilhafte Ausgestaltungen der Erfindung wieder.

Grundgedanke der Erfindung ist es, die Kupplung nicht räumlich zwischen Getriebe und Generator anzuordnen, sondern Getriebewelle und Generatorwelle auf der dem Getriebe abgewandten Seite des Generators miteinander zu verbinden. Dadurch können Getriebe und Generator sehr dicht zueinander angeordnet und die Windenergieanlage sehr kompakt gebaut werden.

Dabei kann auch - wie aus dem Stand der Technik bekannt - eine Drehzahlüberwachung, eine Drehmomentbegrenzung und eine Bremsscheibe zum Bremsen der Getriebewelle realisiert werden. Diese konstruktiven Maßnahmen haben nur einen geringen Platzbedarf, wobei die Anordnung vom Rotor ausgesehen hinter dem Generator auch gut zugänglich und damit sehr servicefreundlich ist.

Schließlich ist es von großem Vorteil, dass der Maschinenstrang bei der erfindungsgemäßen Anordnung linear, d.h. von einer Seite zur anderen Seite, bevorzugt von der Seite des Rotorlagers bis zur Seite des Generators, aufgebaut werden kann, ohne dass eine Änderung der relativen Position der Komponenten zueinander erfolgen muss. Aufgrund der konzentrischen Bauweise ergibt sich die Ausrichtung der Komponenten automatisch, ohne dass aufwändige Anpassungsprozesse notwendig sind.

Schließlich ist die erfindungsgemäße Anordnung auch deshalb besonders einfach, weil auf eine gesonderte Lagerung der Getriebeabtriebswelle verzichtet werden kann, da diese über die Kupplung durch das Generatorlager gelagert wird.

Die Erfindung wird anhand eines in der beigefügten Zeichnung dargestellten, besonders bevorzugt ausgestalteten Ausführungsbeispiels näher erläutert.

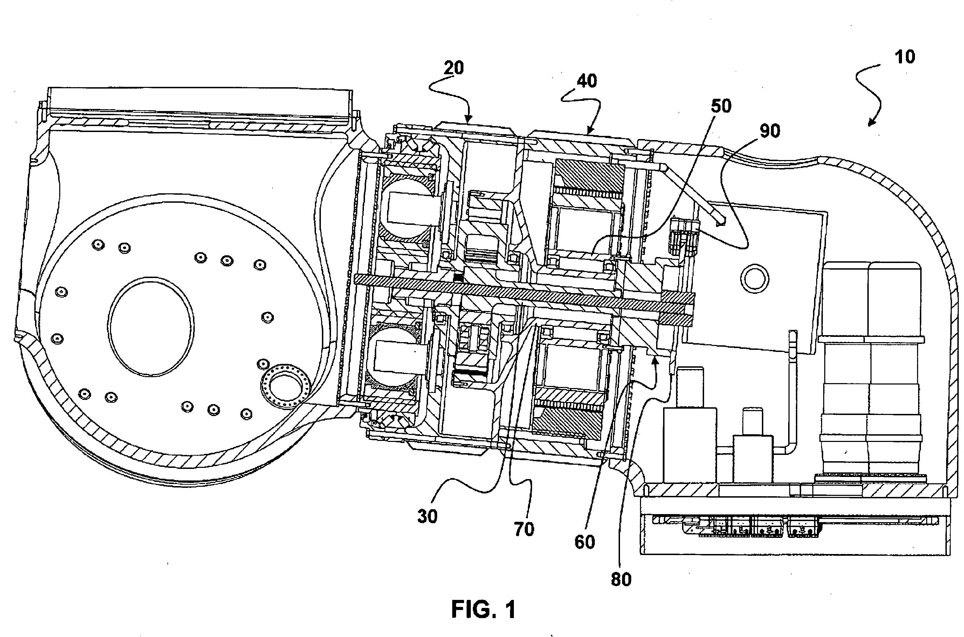

Fig. 1 zeigt einen Schnitt durch eine SCD^{®}-Windenergieanlage im Bereich der als Kopfträger ausgebildeten Gondel. Die als bevorzugtes Ausführungsbeispiel dargestellte Windenergieanlage zeigt im Wesentlichen den aus der WO 2008/113318 A2 bekannten Aufbau, sodass für die nicht unmittelbar zur vorliegenden Erfindung gehörenden Komponenten auf die vorveröffentlichte Schrift verwiesen wird. Im Übrigen ist die vorliegende Erfindung nicht zur Verwendung auf die vorbekannte Windenergieanlage beschränkt, sondern kann in jeder Windenergieanlage verwendet werden - sie ist lediglich in der gezeigten SCD-Windenergieanlage aufgrund des nur geringen Platzbedarfs und der weiteren oben genannten Vorteile besonders vorteilhaft.

Die bevorzugt ausgestaltete Windenergieanlage 10 weist ein zweistufiges Planetengetriebe 20 mit einer als Getriebeabtrieb wirkenden Getriebewelle 30 und einen Generator 40 mit einer als Generatorantrieb wirkenden Generatorwelle 50 auf.

Erfindungsgemäß ist die Kupplung 60 zum Verbinden der Getriebeabtriebswelle 30 mit der Generatorantriebswelle 50 auf der Seite des Generators 40 angeordnet, die dem Getriebe 20 gegenüberliegt. Um nun eine Verbindung zwischen Getriebewelle 30 und Generatorwelle 50 zu ermöglichen, ist die Generatorwelle 50 als Hohlwelle ausgeführt, sodass die Getriebewelle 30 durch die Generatorwelle 50 und damit durch den Generator 40 von der dem Getriebe 20 zugewandten Seite zu der dem Getriebe 20 abgewandten Seite des Generators 40 geführt werden kann.

Die Kupplung 60 kann damit auf der dem Getriebe 20 abgewandten Seite des Generators 40 einerseits ohne weiteres mit der Getriebewelle 50 und andererseits mit der die Generatorwelle 50 durchstoßenden Getriebewelle 30 beispielsweise mittels eines Spannsatzes verbunden werden. Als Generatorwelle 50 wird auch der Rotor des Generators 40 angesehen, sodass die Kupplung 60 auch direkt mit dem Rotor des Generators 40 verbunden sein kann.

Einer gesonderten Lagerung der Getriebewelle 30 bedarf es bei dieser Ausführung nicht, da die Getriebewelle 30 durch die Verbindung mit der Kupplung 60 gemeinsam mit der Generatorwelle 50 in deren Lager gelagert wird.

Insbesondere ist ein feststehender hohler Zapfen 70 vorgesehen, auf dessen Außenseite zwei Lager zur Lagerung der Generatorwelle 50 (bzw. des Rotors des Generators 40) vorgesehen sind, wohingegen im Hohlraum des Zapfens 70 die Abtriebswelle 30 des Getriebes 20 geführt ist. Die Generatorwelle 50 kann aber auch ebenso im Zapfen 70 gelagert sein, wenn der Zapfen 70 als Teil des Gehäuses ausgebildet ist. Dabei kann auch die Getriebewelle 30 als Hohlwelle ausgebildet zu sein, um beispielsweise aus dem hinteren Bereich des Kopfträgers in die Nabe der Windenergieanlage 10 führende Versorgungsleitungen aufzunehmen.

Weiterhin ist die Kupplung 60 zum Schutz des Getriebes 40 vor kurzzeitig auftretenden hohen Momenten, beispielsweise bei einem Generatorkurzschluss, als Rutschkupplung ausgebildet. Besonders bevorzugt weist die Rutschkupplung 60 einen ein Durchrutschen der Kupplung 60 erfassenden Sensor, beispielsweise einen Wegmesser, aufder Sensor erfasst also eine an der Rutschkupplung auftretende Relativbewegung von Getriebewelle 30 zu Generatorwelle 50. Höchst bevorzugt erfasst der Sensor nicht nur ein Durchrutschen, sondern auch den Rutschwinkel pro Rutschvorgang.

Darüber hinaus verfügt die Windenergieanlage 10 über eine mit dem Sensor verbundene Datenverarbeitungseinrichtung, die das Durchrutschen protokolliert und gegebenenfalls an eine zentrale Stelle zur Überwachung der Windenergieanlage 10 weiterleitet. So können beispielsweise das häufige Auftreten von Rutschbewegungen an der Kupplung 60 innerhalb eines bestimmten Zeitraums und/oder besonders hohe Rutschwinkel pro Rutschvorgang signalisieren, dass die Rutschkupplung 60 nachjustiert werden und/oder die Anlage 10 generell gewartet werden muss. Dabei sind auch nach Dringlichkeit gestufte Meldungen denkbar, die mit unterschiedlichen Farben, z.B. gelb oder rot, markiert sein können, um dem Betreiber der Windenergieanlage schnell einen Überblick über die wichtigsten Meldungen zu verschaffen und die notwendigen Maßnahmen für den einwandfreien Betrieb ergreifen bzw. diesen wieder herstellen zu können. So kann beispielsweise der Betreiber oder bevorzugt die Datenverarbeitungseinrichtung selbst die Leistung der Windenergieanlage, vorzugsweise abgestuft um jeweils 20 %, reduzieren oder gar abschalten, um ein zu häufiges Durchrutschen und damit Verschleiß bis zur nächsten Wartung zu vermeiden.

Schließlich weist der mit der Getriebewelle 30 verbundene Kupplungsteil eine mit einer Scheibenbremse 90 zusammenwirkende Bremsscheibe 80 auf, wobei das Rutschelement der Kupplung 60 zwischen dem mit der Getriebewelle 30 verbundenen Kupplungsteil und dem mit der Generatorwelle 50 verbundenen Kupplungsteil angeordnet ist. Dadurch kann die Scheibenbremse unter Umgehung der Rutschkupplung 60 direkt auf die Getriebewelle 30 wirken und die Windenergieanlage 10 vollständig abgebremst werden.

## Patentansprüche

1. Windenergieanlage (10) mit
- einem Getriebe (20),
- einer als Getriebeabtrieb wirkenden Getriebewelle (30),
- einem Generator (40),
- einer als Generatorantrieb wirkenden Generatorwelle (50),
- einer die Getriebewelle (30) und die Generatorwelle (50) miteinander verbindenden Kupplung (60),
wobei
- die Generatorwelle (50) als Hohlwelle ausgebildet ist,
- die Kupplung (60) auf der dem Getriebe (20) abgewandten Seite des Generators (40) mit der Generatorwelle (50) verbunden angeordnet und als Rutschkupplung ausgebildet ist, und
- die Getriebewelle (30) die Generatorwelle (50) durchstoßend mit der Kupplung (60) verbunden ist
**dadurch gekennzeichnet, dass**
der mit der Getriebewelle (30) verbundene Kupplungsteil eine mit einer Scheibenbremse (90) zusammenwirkende Bremsscheibe (80) aufweist, wobei das Rutschelement der Kupplung (60) zwischen dem mit der Getriebewelle (30) verbundenen Kupplungsteil und dem mit der Generatorwelle (50) verbundenen Kupplungsteil angeordnet ist.

2. Windenergieanlage (10) nach Anspruch 1, **dadurch gekennzeichnet, dass** die Generatorwelle (50) an einem im Inneren der Generatorwelle (50) konzentrisch angeordneten Zapfen (70) gelagert ist, wobei der Zapfen (70) hohl ausgebildet und die Getriebewelle (30) durch den Hohlraum des Zapfen (70) durchgeführt ist.

3. Windenergieanlage (10) nach einem der vorhergehenden Ansprüche, **dadurch gekennzeichnet, dass** die Getriebewelle (30) durch die Verbindung der Getriebewelle (30) mit der Generatorwelle (50) mittels der Kupplung (60) in der Generatorwellenlagerung gelagert ist.

4. Windenergieanlage (10) nach einem der vorhergehenden Ansprüche, **gekennzeichnet durch** einen ein Durchrutschen der Kupplung (60) erfassenden Sensor.

5. Windenergieanlage (10) nach einem der vorhergehenden Ansprüche, **gekennzeichnet durch** einen Sensor zum Erfassen des Rutschwinkels pro Rutschvorgang.

6. Windenergieanlage (10) nach einem der Ansprüche 4 und 5, **gekennzeichnet durch** eine mit dem Sensor verbundene Datenverarbeitungseinrichtung zur Ausgabe eines Warnsignals bei Überschreiten einer vorbestimmten erfassten Rutschanzahl und/oder eines vorbestimmten erfassten Rutschwinkels.

7. Windenergieanlage (10) nach Anspruch 6, **dadurch gekennzeichnet, dass** die Datenverarbeitungseinrichtung eine Leistungsreduzierung oder eine Abschaltung der Anlage auslöst.

## Claims

1. A wind turbine (10) having
- a transmission (20),
- a transmission shaft (30) acting as transmission output,
- a generator (40),
- a generator shaft (50) acting as the generator drive,
- a coupling (60) connecting the transmission shaft (30) and the generator shaft (50) to one other,
wherein
- the generator shaft (50) is designed as a hollow shaft,
- the coupling (60) is arranged connected to the generator shaft (50) on the side of the generator (40) facing away from the transmission shaft (20) and is designed as a slip coupling, and
- the transmission shaft (30) passes through the generator shaft (50) and is connected to the coupling (60),
**characterized in that**
the coupling part connected to the transmission shaft (30) exhibits a brake disk (80) cooperating with a disk brake (90), the slip element of the coupling (60) being arranged between the coupling part connected to the transmission shaft (30) and the coupling part connected to the generator shaft (50).

2. The wind turbine (10) according to Claim 1, **characterized in that** the generator shaft (50) is supported on a journal (70) that is arranged concentrically inside the generator shaft (50), the journal (70) being of hollow design and the transmission shaft (30) being guided through the hollow space of the journal (70).

3. The wind turbine (10) according to one of the preceding claims, **characterized in that** the transmission shaft (30) is supported by means of the coupling (60) in the generator shaft bearing as a result of the connection of the transmission shaft (30) to the generator shaft (50).

4. The wind turbine (10) according to one of the preceding claims, **characterized by** a sensor detecting a slipping of the coupling (60).

5. The wind turbine (10) according to one of the preceding claims, **characterized by** a sensor for detecting the slip angle for each slip process.

6. The wind turbine (10) according to one of Claims 5 and 6, **characterized by** a data processing device connected to the sensor for outputting a warning signal when a predetermined detected slipped frequency and/or a predetermined detected slip angle are exceeded.

7. The wind turbine (10) according to Claim 7, **characterized in that** the data processing device triggers a power reduction or a switching-off of the turbine.

## Revendications

1. Éolienne (10) dotée d'
- une transmission (20),
- une arbre de transmission agissant (30) comme entraînement de transmission,
- un générateur (40),
- un arbre de générateur (50) agissant comme entraînement de générateur,
- un raccord (60) reliant l'arbre de transmission (30) et l'arbre du générateur (50),
à savoir que
- l'arbre du générateur (50) a la forme d'un arbre creux,
- l'embrayage (60) sur le côté tournant le dos à la transmission (20) du générateur (40) relié à l'arbre du générateur (50) et ayant la forme d'un raccord antidérapant, et
- l'arbre de la transmission (30) l'arbre du générateur (50) relié en passant à travers l'embrayage (60)
**caractérisée en ce que**
la pièce de l'embrayage reliée à l'arbre de la transmission (30) possède un disque de frein (80) agissant avec un frein à disque (90), à savoir que le raccord antidérapant de l'embrayage (60) est placé entre la pièce de l'embrayage reliée à l'arbre de la transmission (30) et la pièce de l'embrayage reliée avec l'arbre du générateur (50).

2. Éolienne (10) selon la revendication 1, **caractérisée en ce que** l'arbre du générateur (50) soit placé contre une broche (70) placée de manière concentrique à l'intérieur de l'arbre du générateur, à savoir que la broche (70) est creuse et que l'arbre de l'embrayage (30) est traversé par la cavité de la broche (70)

3. Éolienne (10) d'après une des revendications ci-dessus, **caractérisée en ce que** l'arbre de l`embrayage (30) soit logé, par le raccord de l'arbre de l'embrayage (30) avec l'arbre du générateur (50) au moyen de l'embrayage (60), dans le logement pour l'arbre du générateur.

4. Éolienne (10) d'après une des revendications ci-dessus, **caractérisée par** un capteur enregistrant un dérapage de l'embrayage (60).

5. Éolienne (10) d'après une des revendications ci-dessus, **caractérisée par** un capteur servant à saisir l'angle de dérapage par dérapage.

6. Éolienne (10) d'après une des revendications 4 et 5, **caractérisée par** un dispositif de traitement des données relié à un capteur permettant l'émission d'un signal d'avertissement lorsque le chiffre de dérapage et/ou l'angle de dérapage prédéfinis sont dépassés.

7. Éolienne (10) d'après la revendication 6, **caractérisée en ce que** le dispositif de traitement des données enclenche une diminution de la puissance ou un arrêt de l'installation.
